# EUROPEAN PATENT SPECIFICATION

(11) **EP 4 517 463 B1**
(45) Date of publication and mention of the grant of the patent: **10.12.2025**
(21) Application number: 24196147.3
(22) Date of filing: 23.08.2024
(51) Int. Cl.: G05B 23/02

(54) **SENSOR DEVICE FOR ANOMALY DETECTION THROUGH MACHINE LEARNING AND RELATED CONTROL METHOD**
SENSORVORRICHTUNG ZUR ANOMALIEDETEKTION DURCH MASCHINENLERNEN UND ZUGEHÖRIGES STEUERUNGSVERFAHREN
DISPOSITIF DE CAPTEUR POUR DÉTECTION D'ANOMALIE PAR APPRENTISSAGE AUTOMATIQUE ET PROCÉDÉ DE COMMANDE ASSOCIÉ

(30) Priority: 28.08.2023 IT 202300017628
(43) Date of publication of application: 05.03.2025
(73) Proprietor: STMicroelectronics International N.V., 1228 Plan-les-Ouates, Geneva (CH)
(72) Inventor: RIZZARDINI, Federico, 20019 Settimo Milanese (MI) (IT); BRACCO, Lorenzo, 10034 Chivasso (TO) (IT)
(74) Representative: Studio Torta S.p.A.

(56) References cited:
- US-A1- 2019 391 038
- US-A1- 2021 201 191

## Description

### Technical Field

The present invention relates to a sensor device for anomaly detection through machine learning and to the related control method.

### Background

As is known, numerous types of sensors are available nowadays, which allow corresponding physical quantities to be monitored. Furthermore, it is known that numerous sensors allow the occurrence of anomalous situations to be detected.

For example, sensors are known which are coupled, in use, to corresponding devices (for example, mechanical devices), in order to detect corresponding quantities (for example, accelerations). Furthermore, it is known that the ability, by sensors, to detect the occurrence of anomalous behavior of the devices to which they are coupled, automatically, i.e. without the supervision of a human operator, is nowadays very required, in order to be able to promptly put into action corresponding actions (for example, switching off the device).

For example, sensors are known which include respective microcontrollers, which may be programmed so as to implement machine learning algorithms for identifying, on the basis of the values of the quantities detected by the sensors, the occurrence of anomalies in the functioning of the devices having the sensors coupled thereto. As is known, these algorithms generally provide for performing an initial training step and subsequently an inference step; furthermore, since the training step is often burdensome from a computational point of view, it is generally performed outside the sensor (for example, by an external computer), while the inference step is performed by the microcontroller, which has previously received the model of the related machine learning algorithm, where model means a computer code that encodes the structure and the parameters/thresholds generated by the machine learning algorithm during the training step. However, these solutions usually require the support of an external computer to perform the training step, and further provide for the microcontroller to acquire the sensory data and continuously perform the inference step, resulting in consumption of computational resources of the microcontroller and resulting in high consumptions by the same microcontroller.

US 2021/201191 A1 discloses a sensor device according to the preamble of claim 1.

US 2019/391038 A1 discloses a monitoring apparatus, which achieves a low error rate by dividing measurement data into a plurality of segments and processing each segment.

### Summary

The aim of the present invention is therefore to provide a sensor device which at least partially overcomes the drawbacks of the prior art.

According to the present invention, a sensor device and a control method are provided, as defined in the attached claims.

### Brief Description of the Figures

For a better understanding of the present invention, embodiments are now described, purely by way of non-limiting example, with reference to the attached drawings, wherein:
- Figures 1 and 5 show block diagrams of sensor devices;
- Figure 2 shows a block diagram of a portion of a sensor device;
- Figures 3A and 3B show representations of a same decision tree, with different values of the thresholds; and
- Figure 4 shows a flowchart of operations carried out by the present sensor device.

### Description of Embodiments

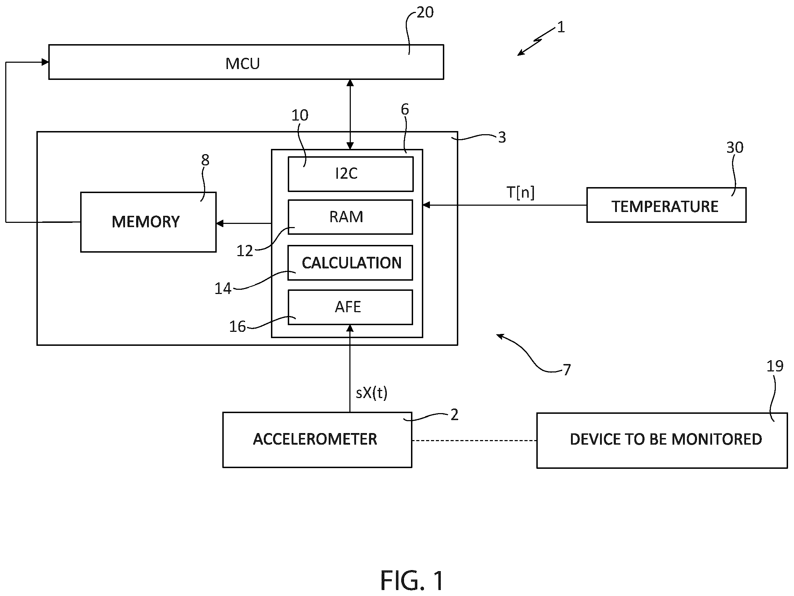

Figure 1 shows a sensor device 1, which comprises a respective transducer, which, purely by way of example, and without any loss of generality, is formed by an accelerometer 2, which is of a per se known type and is for transducing an acceleration into a corresponding analogue-type electrical signal sX(t). In use, the accelerometer 2 is mechanically coupled (e.g., is fixed) to a device to be monitored 19 (e.g., a machinery including movable parts), in such a way that the acceleration transduced by the accelerometer 2 is indicative of the functioning of the device to be monitored 19; in Figure 1, this mechanical coupling is indicated with a dashed line.

The sensor device 1 further comprises a processing circuit 3, which is an application-specific integrated circuit (ASIC), is electrically coupled to the accelerometer 2 and implements a configurable stage 6 and a memory stage 8. Although not shown, the processing circuit 3 and the accelerometer 2 may be formed in a same package, which is mechanically coupled to the device to be monitored 19; furthermore, the processing circuit 3 and the accelerometer 2 form an acceleration sensor 7.

The configurable stage 6 comprises an interface stage 10, a local memory 12, a calculation stage 14 and an analog-to-digital front-end 16, which, although not shown in detail in Figure 1, are operatively coupled to each other.

The sensor device 1 also comprises a microcontroller unit 20 and is coupleable, in use, to an external sensor; purely by way of example, in the example shown in Figure 1, the external sensor is formed by a temperature sensor 30, which in a per se known manner is for generating a succession of temperature samples T[n]. Although not shown, the microcontroller unit 20 and the temperature sensor 30 may be formed in respective packages, other than the package containing the processing circuit 3 and the accelerometer 2.

The microcontroller unit 20 is programmable by an external device (not shown; e.g., a computer) in such a way that, as described in detail below, the microcontroller unit 20 in turn programs the configurable stage 6. In this regard, it is anticipated that the microcontroller unit 20 is programmable by the external device in such a way that the microcontroller unit 20 in turn stores, in the local memory 12 of the configurable stage 6, filtering parameters, a feature list, a control parameter, thresholds and instructions that encode the structure of a decision tree, i.e. instructions that, when executed, cause the execution of the decision tree having such structure, the structure being understood as a succession of conditional instructions (for example of the IF-ELSE type) and instructions that are executed when the conditions provided by the conditional instructions are met, this structure being executed starting from a value vector and on the basis of the aforementioned thresholds, as explained in greater detail below. Furthermore, the microcontroller unit 20 has access to the memory stage 8, i.e. it can read the memory stage 8; in addition, the memory stage 8 can be written by the configurable stage 6.

In greater detail, the interface stage 10 implements for example a slave-type interface according to the I²C communication protocol, which allows the configurable stage 6 to establish a communication channel with the microcontroller unit 20, in order to allow the microcontroller unit 20 to program the configurable stage 6; furthermore, the interface stage 10 implements a master-type interface according to the I²C communication protocol, which allows the configurable stage 6 to establish a communication channel with the temperature sensor 30, in such a way as to allow the configurable stage 6 to acquire the succession of temperature samples T[n]. Furthermore, in use, the configurable stage 6 receives the electrical signal sX(t), on the basis of which the analog-to-digital front-end 16 generates a succession of samples X[n] of the aforementioned acceleration, i.e. it carries out an analog-to-digital conversion.

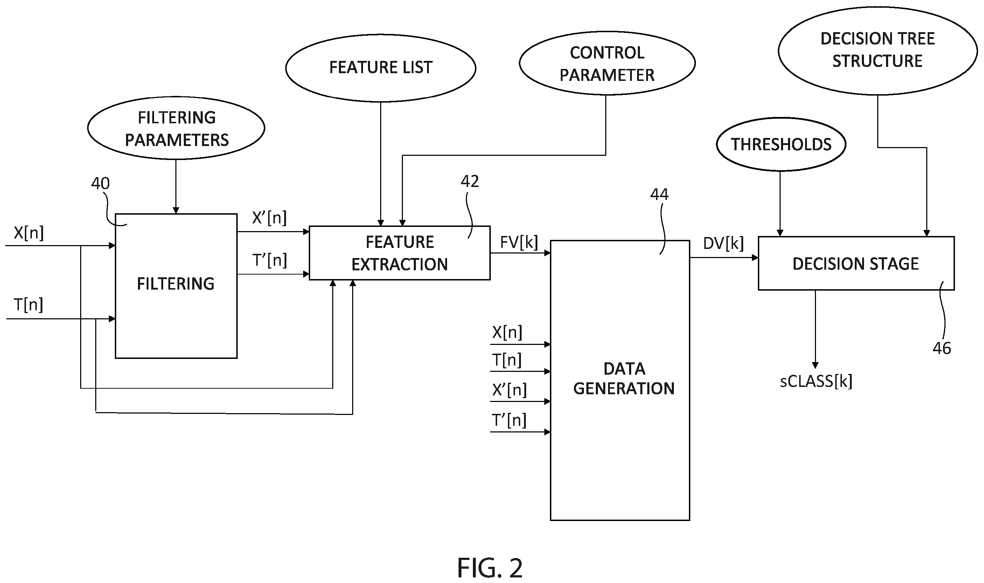

As regards the calculation stage 14, it is configured as shown in Figure 2.

In detail, the calculation stage 14 implements a filtering stage 40, which receives the acceleration samples X[n] and generates at least a succession of filtered acceleration samples X'[n], implementing a first digital filter (for example, of low-pass type) which is applied to the acceleration samples X[n]. Furthermore, the filtering stage 40 receives the succession of temperature samples T[n] and generates at least a succession of filtered temperature samples T'[n], implementing a second digital filter (for example, of low-pass type) which is applied to the temperature samples X[n]. Furthermore, the calculation stage 14 implements each of the first and the second digital filters in such a way that the filter type and the related coefficients are defined by the aforementioned filtering parameters, which are stored in the local memory 12 and, as said, are set by an external user, through the microcontroller unit 20.

The calculation stage 14 further implements a feature extraction stage 42, which receives the acceleration samples X[n], the filtered acceleration samples X' [n], the temperature samples T[n] and the filtered temperature samples T' [n], on the basis of which it generates a succession of feature vectors FV[k], as a function of the control parameter stored in the local memory 12.

In greater detail, the control parameter may indicate for example an integer NUM, in which case the feature extraction stage 42 generates a corresponding feature vector FV[k] which is a function of four sets formed respectively by an even integer equal to NUM of i) successive acceleration samples X[n], ii) successive filtered acceleration samples X' [n], iii) successive temperature samples T[n], and iv) successive filtered temperature samples T' [n]. Without any loss of generality, the aforementioned four sets refer to a same time interval; consequently, the samples of the four sets may be written respectively as X[n], X' [n], T[n] and T' [n], with n=n0, n0+1, ...n0+NUM-1. Furthermore, purely by way of example, successive feature vectors FV[k] may be a function of corresponding groups of four sets of samples, with successive groups being disjoint, i.e. they do not share any samples, in which case it occurs that, given two successive feature vectors FV[k] such that the samples of the four sets of the first feature vector FV[k] are indexed by n=n0, n0+1, ...n0+NUM-1, the samples of the four sets of the second feature vector FV[k] are indexed by n=n0+NUM, n0+NUM+1, ...n0+2*NUM-1. In this case, the feature vectors FV[k] are generated with a frequency equal to fₛ/NUM, where fₛ indicates the frequency with which the acceleration samples X[n], the filtered acceleration samples X' [n], the successive temperature samples T[n] and the filtered temperature samples T'[n] are generated. However, variants are possible in which successive feature vectors FV[k] are a function of corresponding groups of four sets of samples, such groups being partially superimposed; in this case, given two successive feature vectors FV[k] such that the samples of the four sets of the first feature vector FV[k] are indexed by n=n0, n0+1, ...n0+NUM-1, the samples of the four sets of the second feature vector FV[k] are indexed for example by n=n0+1, n0+2, ...n0+NUM. In this case, the feature vectors FV[k] are generated with a frequency equal to fₛ. In any case, the timing with which the feature vectors FV[k] are generated and the related selection of the sets of samples on the basis of which the feature vectors FV[k] are calculated are irrelevant for the purposes of the functioning of the sensor device 1 and may change with respect to what has been described.

Even in greater detail, each feature vector FV[k] is formed by a number of elements equal to the number of features of the feature list stored in the local memory 12. In particular, given any feature vector FV[k], each element of the feature vector FV[k] is equal to the value of a corresponding feature of the aforementioned feature list, when calculated on the basis of the four sets of samples to which the feature vector FV[k] refers. For example, indicating respectively by IN1, IN2, IN3 and IN4 the sets relating to the feature vector FV[k] formed respectively by the acceleration samples X[n], the filtered acceleration samples X'[n], the temperature samples T[n] and the filtered temperature samples T'[n], the feature list may provide for calculating, for each of the sets IN1, IN2, IN3, IN4, one or more of the following mathematical quantities: average, variance, standard deviation, peak-to-peak distance, etc. In general, the features may vary from one set to another, and the feature list may also provide for the presence of features that depend, each, on the samples of two or more sets.

The calculation stage 14 also implements a data generation stage 44, which receives at input the acceleration samples X[n], the filtered acceleration samples X'[n], the temperature samples T[n], the filtered temperature samples T'[n] and the feature vectors FV[k]. Furthermore, for each feature vector FV[k], the data generation stage 44 generates a corresponding data vector DV[k], which includes the feature vector FV[k] and may also include further elements, which are respectively a function of the acceleration samples X[n], the filtered acceleration samples X'[n], the temperature samples T[n] and the filtered temperature samples T'[n]; in general, however the presence of these further elements is optional. For example, embodiments are possible in which the data generation stage 44 is absent, in which case the data vectors DV[k] coincide with the feature vectors FV[k].

In practice, the data vectors DV[k] are formed by quantities that are programmable by the microcontroller unit 20.

The calculation stage 14 is also programmable by the microcontroller unit 20 so as to implement a decision stage 46, which receives at input the data vectors DV[k] and applies a decision tree to each data vector DV[k], so as to classify the data vector DV[k].

In greater detail, the decision stage 46 is configured to apply to each data vector DV[k] a decision tree having the decision tree structure encoded in the local memory 12 and the thresholds stored, i.e. programmed, in the local memory 12.

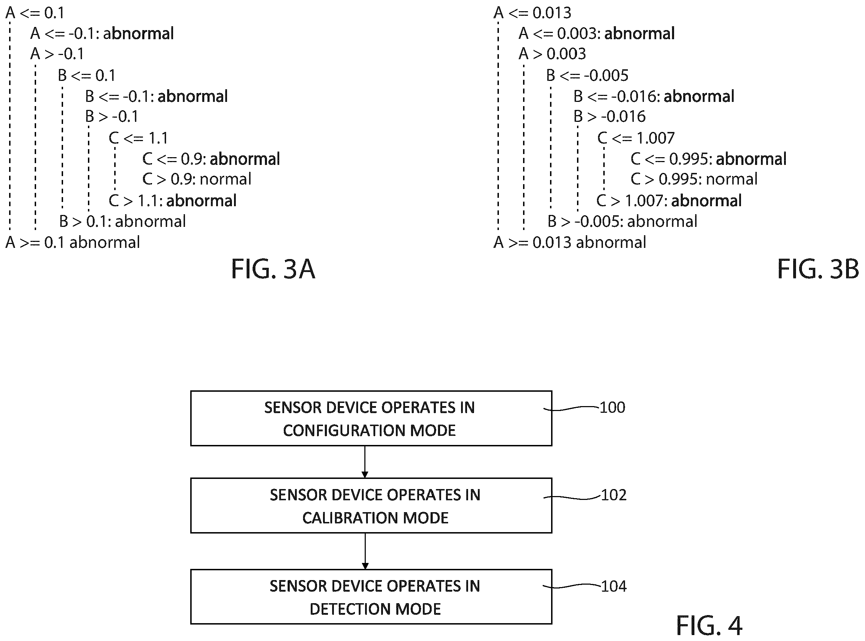

Purely by way of example, Figure 3A shows a graphical representation of a decision tree, which refers to a simplified case, in which each data vector DV[k] is formed by three elements, indicated respectively by A, B and C. Furthermore, in Figure 3A the decision tree structure is represented in a purely qualitative manner such that each conditional instruction is represented by a pair of corresponding inequalities complementary to each other and vertically aligned, in such a way that, if the first inequality is not met, the second inequality is met, and vice versa, as well as in such a way that, when an inequality is met, a classification is alternatively performed or the instruction that is right indented and in the successive row with respect to the inequality is executed.

Furthermore, the decision tree shown in Figure 3A classifies the data vector [A,B,C] as normal or abnormal, i.e. it performs a binary classification. Purely by way of example, the thresholds of the decision tree shown in Figure 3A are such that the decision tree verifies whether the quantity A is comprised in the range (-0.1 - 0.1] and, in the negative case, classifies the data vector as abnormal, while in the affirmative case it verifies whether the quantity B is comprised in the range (-0.1 - 0.1] and, in the negative case, classifies the data vector as abnormal, while in the affirmative case it verifies whether the quantity C is comprised in the range (0.9 - 1.1] and, in the negative case, classifies the data vector as abnormal, while in the affirmative case it classifies the data vector as normal. In other words, the decision tree structure is such that it verifies in succession whether the quantities A, B and C fall within respective ranges of values (each range being defined by a pair of corresponding thresholds), classifying the data vector as abnormal in case at least one of the quantities A, B, C falls outside the respective range of values.

All this having been said, the sensor device 1 performs the operations shown in Figure 4, for example at startup.

Initially, the sensor device 1 operates in a configuration mode (block 100), in which the microcontroller unit 20 configures the configurable stage 6. In particular, the microcontroller unit 20 stores in the local memory 12: filtering parameters, which define the first and the second digital filters, therefore define the filtering stage 40; the feature list, which defines the behavior of the feature extraction stage 42; the control parameter; the instructions that encode the decision tree structure; and initial values of the thresholds, which are for example predetermined, therefore they are independent of the electrical signal sX(t) and of the succession of temperature samples T[n]. It is anticipated that the initial values of the thresholds may be chosen arbitrarily, because they are irrelevant for the purposes of the functioning of the sensor device 1; storing these initial values is therefore optional.

Thereafter, the sensor device 1 operates in a calibration mode (block 102).

In particular, when the sensor device 1 operates in the calibration mode, the filtering stage 40 generates the succession of filtered acceleration samples X'[n] and the succession of filtered temperature samples T'[n] and the feature extraction stage 42 generates the feature vectors FV[k], as previously described. Furthermore, when the sensor device 1 operates in the calibration mode, the data generation stage 44 generates the data vectors DV[k] in the manner previously described, in such a way that the data vectors DV[k] depend, inter alia, on the acceleration samples X[n] and on the temperature samples T[n] acquired while the sensor device 1 is operating in the calibration mode and on the corresponding feature vectors FV[k]; conversely, the decision stage 46 may be inactive.

In practice, the data vectors DV[k] generated while the sensor device 1 is operating in the calibration mode depend, inter alia, on the filtering parameters and on the feature list previously stored in the local memory 12, while the sensor device 1 was operating in the configuration mode. Thereafter, data vectors DV[k] generated while the sensor device 1 is operating in the calibration mode are referred to as the calibration data vectors.

Furthermore, when the sensor device 1 operates in the calibration mode, the configurable stage 6 writes the calibration data vectors to the memory stage 8. In addition, when the sensor device 1 operates in the calibration mode, the microcontroller unit 20 reads the memory stage 8, so as to acquire the calibration data vectors, and calculates updated values of the aforementioned thresholds, as described hereinbelow.

In detail, the microcontroller unit 20 calculates a number of updated values equal to twice the number of elements of each calibration data vector, since, in the present example, the thresholds are a number equal to twice the number of the elements of each calibration data vector. In other words, assuming that the i-th element of each calibration data vector (and therefore also, more generally, of each data vector DV[k]), with i = 1, 2, ..., NUM_D (with NUM_D representing the number of elements of each calibration data vector), represents the value of a corresponding quantity, each quantity is associated with two corresponding thresholds which define a corresponding range of admissible values, i.e. a range of values that this quantity may assume when the device to be monitored 19 functions correctly.

This having been said, for each of said quantities, the microcontroller unit 20 calculates the updated values of the corresponding pair of thresholds, for example by setting the updated values respectively equal to µ+n*σ and µ-n*σ, wherein n is a positive real number chosen by the user, while µ and σ represent respectively the average and the standard deviation of the elements of the calibration data vectors that correspond to the quantity.

Alternatively, and again by way of example, for each of said quantities, the microcontroller unit 20 may calculate the updated values of the corresponding pair of thresholds for example by setting the updated values respectively equal to max+α* (max-min) and min-α* (max-min), where α is a positive real number chosen by the user, while min and max represent respectively the minimum value and the maximum value from among the elements of the calibration data vectors that correspond to the quantity.

In general, however, the algorithms for determining the updated values of the thresholds, and therefore of the ranges of admissible values, may vary with respect to what has been described.

Once the updated values of the thresholds have been calculated, the microcontroller unit 20 stores these updated values in the local memory 12 of the configurable stage 6. Purely by way of example, Figure 3B shows the same decision tree shown in Figure 3A, with updated values of the thresholds.

In practice, the decision tree is trained when the sensor device 1 operates in the calibration mode. In fact, it is assumed that, while the sensor device 1 is operating in the calibration mode, the device to be monitored 19 functions correctly.

Subsequently, the sensor device 1 operates in a detection mode (block 104 of Figure 4).

When the sensor device 1 operates in the detection mode, the filtering stage 40 generates the succession of filtered acceleration samples X'[n] and the succession of filtered temperature samples T'[n] and the feature extraction stage 42 generates the feature vectors FV[k], as previously described. Furthermore, the data generation stage 44 generates the data vectors DV[k], as previously described, in such a way that the data vectors DV[k] depend, inter alia, on the acceleration samples X[n] and on the temperature samples T[n] acquired while the sensor device 1 is operating in the detection mode and on the corresponding feature vectors FV[k]. Furthermore, the data vectors DV[k] generated while the sensor device 1 is operating in the detection mode depend on the filtering parameters and on the feature list stored in the local memory 12 while the sensor device 1 was operating in the configuration mode.

Furthermore, when the sensor device 1 operates in the detection mode, the decision stage 46 applies, to each data vector DV[k], the decision tree, as defined by the decision tree structure encoded in the local memory 12 and by the updated values of the thresholds stored in the local memory 12. Consequently, the decision stage 46 classifies each data vector DV[k] alternatively as abnormal or normal; the normal/abnormal classification (indicated with sCLASS[k] in Figure 2) is therefore indicative, respectively, of correct/anomalous functioning of the device to be monitored 19.

Furthermore, the configurable stage 6 writes the classifications of the data vectors DV[k] to the memory stage 8; the microcontroller unit 20 reads the classifications written to the memory stage 8 and detects the occurrence of an anomaly of the device to be monitored 19, when it reads an abnormal classification. Furthermore, in a per se known manner, the microcontroller unit 20 may implement suitable control strategies, after reading an abnormal classification; for example, the microcontroller unit 20 may alert the user and switch off the device to be monitored 19.

In general, it is however possible that the configurable stage 6 communicates to the microcontroller unit 20 the occurrence of an abnormal classification in a different manner, for example by generating a corresponding interrupt of the microcontroller unit 20.

The advantages that the sensor device 1 affords are clear from the preceding description. In particular, the sensor device 1 implements an anomaly detection scheme that uses a machine learning algorithm that is not very onerous from a computational point of view, which may therefore be implemented by the processing circuit of a sensor, such as for example the acceleration sensor 7, and which may be configured (filters, features and decision tree structure) depending on the device to be monitored. Furthermore, this scheme provides for the learning step to be carried out partly by the processing circuit, which calculates the calibration data vectors, and partly by the microcontroller unit, which calculates the updated values of the thresholds, so as to exploit the hardware resources available on the sensor and without the need to make use of an external computer. Furthermore, the inference step is carried out by the processing circuit, without the need for further involvement of the microcontroller unit, up to the moment when a possible anomaly is detected, with a consequent reduction in the consumptions of the microcontroller unit.

For example, as previously mentioned, the external sensor may be formed, rather than by the temperature sensor 30, by a different external sensor (for example, a magnetometer). Furthermore, the external sensor (in the example described, the temperature sensor 30) may be absent, in which case the processings performed by the calculation stage 14 modify accordingly.

As regards the filtering stage 40, it may receive only a subset of the successions of samples previously described; for example, it may only receive acceleration samples X[n]. Furthermore, as previously mentioned, the filtering stage 40 may include multiple filters for each succession of input samples.

As regards the feature extraction stage 42, the features calculated thereby may differ with respect to what has been described. For example, referring for simplicity to the case shown in Figure 2, the features may be calculated only on some of the sets IN1, IN2, IN3 and IN4; consequently, variants are possible wherein the inputs of the feature extraction stage 42 are different with respect to what has been described. Furthermore, in general it is possible that different features, even if relating to a same succession of samples, are calculated on the basis of a different number of such samples.

However, embodiments are possible wherein the filtering stage 40 and/or the feature extraction stage 42 are absent, in which case the data vectors DV[k] modify accordingly.

Embodiments are also possible wherein the accelerometer 2 generates multiple electrical signals, for example indicative of accelerations along corresponding axes, in which case the digital-to-analog front-end 16 generates a plurality of corresponding successions of samples, which are provided at the input of the filtering stage 40 and, more generally, may be processed in the same manner as described with reference to the succession of acceleration samples X[n], so as to contribute to forming the data vectors DV[k] and, therefore, influence the related classifications.

Any other protocol (for example, MIPI I³C protocol) may be adopted in lieu of the I²C communication protocol.

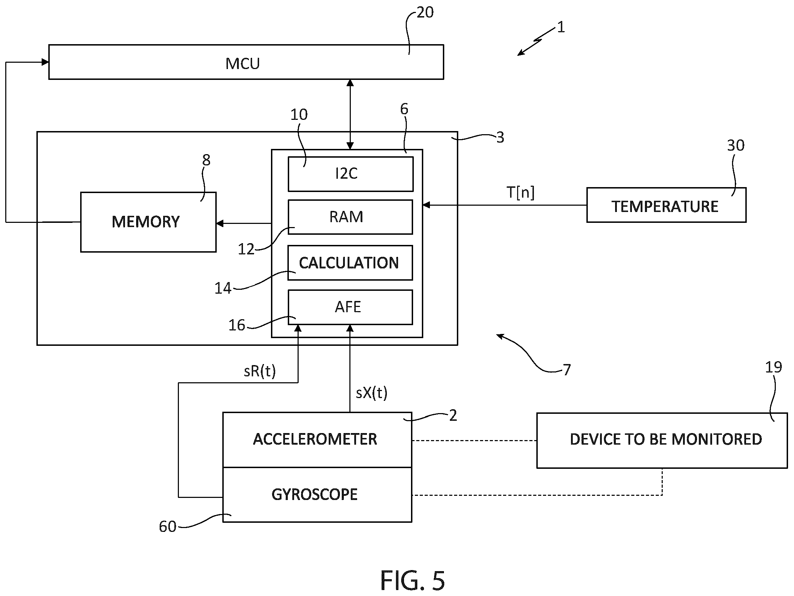

The sensor device 1 may also comprise a further transducer, such as for example a gyroscope 60, as shown in Figure 5. The gyroscope 60 generates at least one additional electrical signal sR(t), which is indicative of at least one angular speed around a rotation axis; for example, the gyroscope 60 is mechanically coupled to the device to be monitored 19 in such a way that the additional electrical signal sR(t) is indicative of an angular speed of the device to be monitored 19. In this case, the analog-to-digital front-end 16 also generates a succession of samples R[n] of the angular speed, which may be processed by the configurable stage 6 in the same manner as described with reference to the acceleration samples X[n], except for any differences in the filtering type and the extraction of the related features, in order to contribute to generating the data vectors DV[k]. Although not shown, the gyroscope 60 may be formed in the same package that contains the accelerometer 2 and the processing circuit 3.

In addition, as previously mentioned, in lieu of the accelerometer 2 a different transducer may be present of a physical quantity that depends on the functioning of the device to be monitored 19. In this case, the transducer may be coupled to the device to be monitored 19 in a manner different with respect to what has been described; for example, the coupling may be of electrical or thermal or chemical type, rather than of mechanical type.

Furthermore, the configurable stage 6 may write further data to the memory stage 8 with respect to what has been described, so as to allow the acquisition of such data by the microcontroller unit 20. For example, the configurable stage 6 may write also the acceleration samples X[n] to the memory stage 8.

The configurable stage 6 may also implement further blocks arranged upstream of the filtering stage 40, such as for example a block (not shown) which calculates the norm of the acceleration samples X[n], so as to generate a corresponding succession of samples which is provided to the filtering stage 40.

In addition, it is possible that the microcontroller unit 20 may allow the user to select from among multiple decision tree structures; in this case, the microcontroller unit 20 stores in the local memory 12 the code that encodes the decision tree structure selected by the user.

Finally, the order in which some of the operations previously described are carried out may change. For example, since, while the sensor device 1 is operating in the calibration mode, the decision stage 46 may be inactive, the microcontroller unit 20 may store in the local memory 12 instructions that encode the decision tree structure after the updated values of the thresholds have been calculated, before starting to operate in detection mode.

## Claims

1. A sensor device (1) comprising a microcontroller unit (20) and a sensor (7) comprising a transducer (2;60) coupleable to a device to be monitored (19) and configured to generate at least one signal (sX(t)) indicative of a physical quantity that depends on the functioning of the device to be monitored (19), the sensor (7) further comprising a processing circuit (3) comprising:
- a conversion stage (16) configured to generate a succession of samples (X[n]) of said physical quantity as a function of the signal (sX(t));
- a data generation stage (12,40,42,44) configured to generate, in a manner programmable by the microcontroller unit (20), a succession of data vectors (DV[k]) as a function of the succession of samples (X[n]), each data vector (DV[k]) being formed by a corresponding set of values of a number of programmable quantities; and
- a decision stage (12,46);
and wherein the microcontroller unit (20) is configured to program the decision stage (12,46) in such a way that the decision stage (12,46) is configured to classify the data vectors (DV[k]) by executing a decision tree having a structure and a plurality of thresholds; said sensor device (1) being **characterized in that** it is further configured to operate:
- in a configuration mode, wherein the microcontroller unit (20) programs the data generation stage (12,40,42,44); and subsequently
- in a calibration mode, wherein the microcontroller unit (20) acquires a corresponding set of data vectors (DV[k]), determines, for each programmable quantity and on the basis of said corresponding set of data vectors (DV[k]), a corresponding range of admissible values and subsequently programs the thresholds as a function of the ranges of admissible values; and subsequently
- in a detection mode, wherein the decision stage (12,46) classifies corresponding data vectors (DV[k]) alternatively as normal or abnormal, by executing the decision tree on the basis of the programmed thresholds.

2. The sensor device (1) according to claim 1, wherein the data generation stage (12,40,42,44) comprises a filtering stage (40) configured to generate at least a succession of filtered samples (X'[n]) by applying a digital filter to the samples (X[n]); and wherein the data generation stage (12,40,42,44) is further configured in such a way that the data vectors (DV[k]) are a function of the filtered samples (X'[n]); and wherein, when the sensor device (1) operates in the configuration mode, the microcontroller unit (20) programs the digital filter.

3. The sensor device (1) according to claim 1 or 2, wherein the data generation stage (12,40,42,44) further comprises a feature extraction stage (42) configured to generate a succession of feature vectors (FV[k]) that depend on the samples (X[n]); and wherein the data generation stage (12,40,42,44) is further configured in such a way that the data vectors (DV[k]) are a function of the feature vectors (FV[k]); and wherein, when the sensor device (1) operates in the configuration mode, the microcontroller unit (20) programs the features.

4. The sensor device (1) according to claim 3 when dependent on claim 2, wherein the feature extraction stage (42) is configured to calculate the value of each feature of the feature vectors (FV[k]) on the basis of a corresponding set of samples (X[n]) or a corresponding set of filtered samples (X' [n]); and wherein each data vector (DV[k]) comprises a respective feature vector (FV[k]).

5. The sensor device (1) according to any of the previous claims, configured to couple to an external sensor (30) configured to generate a succession of external samples T[n] indicative of a corresponding physical quantity; and wherein the data generation stage (12,40,42,44) is configured in such a way that the data vectors (DV[k]) also depend on the external samples T[n].

6. The sensor device (1) according to any of the preceding claims, wherein the transducer (2;60) comprises an acceleration transducer (2) and/or an angular speed transducer (60).

7. The sensor device (1) according to any of the preceding claims, wherein the microcontroller unit (20) is configured to detect an anomaly of the device to be monitored (19) when a data vector (DV[k]) is classified as abnormal.

8. A method for controlling a sensor device (1) comprising a microcontroller unit (20) and a sensor (7) comprising a transducer (2;60) coupleable to a device to be monitored (19) and configured to generate at least one signal (sX(t)) indicative of a physical quantity that depends on the functioning of the device to be monitored (19), the sensor (7) further comprising a processing circuit (3) comprising:
- a conversion stage (16) configured to generate a succession of samples (X[n]) of said physical quantity as a function of the signal (sX(t));
- a data generation stage (12,40,42,44) configured to generate, in a manner programmable by the microcontroller unit (20), a succession of data vectors (DV[k]) as a function of the succession of samples (X[n]), each data vector (DV[k]) being formed by a corresponding set of values of a number of programmable quantities; and
- a decision stage (12,46) programmable by the microcontroller unit (20);
the method comprising programming the decision stage (12,26), through the microcontroller unit (20), in such a way that the decision stage (12,46) is configured to classify the data vectors (DV[k]) by executing a decision tree having a structure and a plurality of thresholds; the method being **characterized in that** it further comprises:
- through the microcontroller unit (20), programming the data generation stage (12,40,42,44); and subsequently
- by the microcontroller unit (20), acquiring a set of data vectors (DV[k]), determining, for each programmable quantity and on the basis of said set of data vectors (DV[k]), a corresponding range of admissible values and subsequently programming the thresholds as a function of the ranges of admissible values; and subsequently
- through the decision stage (12.46), classifying data vectors (DV[k]) alternatively as normal or abnormal, by executing the decision tree on the basis of the programmed thresholds.

9. The method according to claim 8, wherein the data generation stage (12,40,42,44) comprises a filtering stage (40) configured to generate at least a succession of filtered samples (X'[n]) by applying a digital filter to the samples (X[n]); and wherein the data generation stage (12,40,42,44) is further configured in such a way that the data vectors (DV[k]) are a function of the filtered samples (X'[n]); and wherein programming the data generation stage (12,40,42,44) comprises programming the digital filter.

10. The method according to claim 8 or 9, wherein the data generation stage (12,40,42,44) further comprises a feature extraction stage (42) configured to generate a succession of feature vectors (FV[k]) which depend on the samples (X[n]); and wherein the data generation stage (12,40,42,44) is further configured in such a way that the data vectors (DV[k]) are a function of the feature vectors (FV[k]); and wherein programming the data generation stage (12,40,42,44) comprises programming the features.

11. The method according to claim 10 when dependent on claim 9, wherein the feature extraction stage (42) is configured to calculate the value of each feature of the feature vectors (FV[k]) on the basis of a corresponding set of samples (X[n]) or of a corresponding set of filtered samples (X'[n]); and wherein each data vector (DV[k]) comprises a respective feature vector (FV[k]).

12. The method according to any of claims 8 to 11, further comprising coupling the sensor device (1) to an external sensor (30) configured to generate a succession of external samples T[n] indicative of a corresponding physical quantity; and wherein the data generation stage (12,40,42,44) is configured in such a way that the data vectors (DV[k]) also depend on the external samples T[n].

13. The method according to any of claims 8 to 12, comprising detecting, through the microcontroller unit (20), an anomaly of the device to be monitored (19), when a data vector (DV[k]) is classified as abnormal.

## Patentansprüche

1. Sensorvorrichtung (1), die eine Mikrocontrollereinheit (20) und einen Sensor (7) umfasst, der einen Wandler (2; 60) umfasst, der mit einer zu überwachenden Vorrichtung (19) gekoppelt werden kann und so konfiguriert ist, dass er mindestens ein Signal (sX(t)) erzeugt, das eine physikalische Größe anzeigt, die von der Funktionsweise der zu überwachenden Vorrichtung (19) abhängt, wobei der Sensor (7) ferner eine Verarbeitungsschaltung (3) umfasst, die Folgendes umfasst:
- eine Umwandlungsstufe (16), die so konfiguriert ist, dass sie eine Abfolge von Abtastwerten (X[n]) der physikalischen Größe als Funktion des Signals (sX(t)) erzeugt;
- eine Datenerzeugungsstufe (12, 40, 42, 44), die so konfiguriert ist, dass sie in einer von der Mikrocontrollereinheit (20) programmierbaren Weise eine Abfolge von Datenvektoren (DV[k]) als Funktion der Abfolge von Abtastwerten (X[n]) erzeugt, wobei jeder Datenvektor (DV[k]) durch einen entsprechenden Satz von Werten einer Anzahl programmierbarer Größen gebildet wird; und
- eine Entscheidungsstufe (12, 46);
und wobei die Mikrocontrollereinheit (20) so konfiguriert ist, dass sie die Entscheidungsstufe (12, 46) derart programmiert, dass die Entscheidungsstufe (12, 46) so konfiguriert ist, dass sie die Datenvektoren (DV[k]) klassifiziert, indem ein Entscheidungsbaum mit einer bestimmten Struktur und einer Vielzahl von Schwellenwerten ausgeführt wird; wobei die Sensorvorrichtung (1) **dadurch gekennzeichnet ist, dass** sie ferner so konfiguriert ist, dass sie wie folgt arbeitet:
- in einem Konfigurationsmodus, in dem die Mikrocontrollereinheit (20) die Datenerzeugungsstufe (12, 40, 42, 44) programmiert; und anschließend
- in einem Kalibriermodus, in dem die Mikrocontrollereinheit (20) einen entsprechenden Satz von Datenvektoren (DV[k]) erfasst, für jede programmierbare Größe auf der Grundlage des entsprechenden Satzes von Datenvektoren (DV[k]) einen entsprechenden Bereich zulässiger Werte bestimmt und anschließend die Schwellenwerte als Funktion der zulässigen Bereiche programmiert; und anschließend
- in einem Detektionsmodus, in dem die Entscheidungsstufe (12, 46) entsprechende Datenvektoren (DV[k]) alternativ als normal oder abnormal klassifiziert, indem der Entscheidungsbaum auf der Grundlage der programmierten Schwellenwerte ausgeführt wird.

2. Sensorvorrichtung (1) nach Anspruch 1, wobei die Datenerzeugungsstufe (12, 40, 42, 44) eine Filterstufe (40) umfasst, die so konfiguriert ist, dass sie mindestens eine Abfolge von gefilterten Abtastwerten (X'[n]) erzeugt, indem sie einen digitalen Filter auf die Abtastwerte (X[n]) anwendet; und wobei die Datenerzeugungsstufe (12, 40, 42, 44) ferner so konfiguriert ist, dass die Datenvektoren (DV[k]) eine Funktion der gefilterten Abtastwerte (X'[n]) sind; und wobei die Mikrocontrollereinheit (20) den digitalen Filter programmiert, wenn die Sensorvorrichtung (1) in dem Konfigurationsmodus arbeitet.

3. Sensorvorrichtung (1) nach Anspruch 1 oder 2, wobei die Datenerzeugungsstufe (12, 40, 42, 44) ferner eine Merkmalsextraktionsstufe (42) umfasst, die so konfiguriert ist, dass sie eine Abfolge von Merkmalsvektoren (FV[k]) erzeugt, die von den Abtastwerten (X[n]) abhängen; und wobei die Datenerzeugungsstufe (12, 40, 42, 44) ferner so konfiguriert ist, dass die Datenvektoren (DV[k]) eine Funktion der Merkmalsvektoren (FV[k]) sind; und wobei die Mikrocontrollereinheit (20) die Merkmale programmiert, wenn die Sensorvorrichtung (1) in dem Konfigurationsmodus arbeitet.

4. Sensorvorrichtung (1) nach Anspruch 3, wenn sie von Anspruch 2 abhängt, wobei die Merkmalsextraktionsstufe (42) so konfiguriert ist, dass sie den Wert jedes Merkmals der Merkmalsvektoren (FV[k]) auf der Grundlage eines entsprechenden Satzes von Abtastwerten (X[n]) oder eines entsprechenden Satzes von gefilterten Abtastwerten (X'[n]) berechnet; und wobei jeder Datenvektor (DV[k]) einen jeweiligen Merkmalsvektor (FV[k]) umfasst.

5. Sensorvorrichtung (1) nach einem der vorhergehenden Ansprüche, die so konfiguriert ist, dass sie mit einem externen Sensor (30) gekoppelt werden kann, der so konfiguiert ist, dass er eine Abfolge von externen Abtastwerten T[n] erzeugt, die eine entsprechende physikalische Größe anzeigen; und wobei die Datenerzeugungsstufe (12, 40, 42, 44) derart konfiguriert ist, dass die Datenvektoren (DV[k]) ebenfalls von den externen Abtastwerten T[n] abhängen.

6. Sensorvorrichtung (1) nach einem der vorhergehenden Ansprüche, wobei der Wandler (2; 60) einen Beschleunigungswandler (2) und/oder einen Winkelgeschwindigkeitswandler (60) umfasst.

7. Sensorvorrichtung (1) nach einem der vorhergehenden Ansprüche, wobei die Mikrocontrollereinheit (20) so konfiguriert ist, dass sie eine Anomalie der zu überwachenden Vorrichtung (19) detektiert, wenn ein Datenvektor (DV[k]) als abnormal klassifiziert wird.

8. Verfahren zum Steuern einer Sensorvorrichtung (1), die eine Mikrocontrollereinheit (20) und einen Sensor (7) umfasst, der einen Wandler (2; 60) umfasst, der mit einer zu überwachenden Vorrichtung (19) gekoppelt werden kann und so konfiguriert ist, dass er mindestens ein Signal (sX(t)) erzeugt, das eine physikalische Größe anzeigt, die von der Funktionsweise der zu überwachenden Vorrichtung (19) abhängt, wobei der Sensor (7) ferner eine Verarbeitungsschaltung (3) umfasst, die Folgendes umfasst:
- eine Umwandlungsstufe (16), die so konfiguriert ist, dass sie eine Abfolge von Abtastwerten (X[n]) der physikalischen Größe als Funktion des Signals (sX(t)) erzeugt;
- eine Datenerzeugungsstufe (12, 40, 42, 44), die so konfiguriert ist, dass sie in einer von der Mikrocontrollereinheit (20) programmierbaren Weise eine Abfolge von Datenvektoren (DV[k]) als Funktion der Abfolge von Abtastwerten (X[n]) erzeugt, wobei jeder Datenvektor (DV[k]) durch einen entsprechenden Satz von Werten einer Anzahl programmierbarer Größen gebildet wird; und
- eine von der Mikrocontrollereinheit (20) programmierbare Entscheidungsstufe (12, 46);
wobei das Verfahren das Programmieren der Entscheidungsstufe (12, 26) durch die Mikrocontrollereinheit (20) derart umfasst, dass die Entscheidungsstufe (12, 46) so konfiguriert ist, dass sie die Datenvektoren (DV[k]) klassifiziert, indem ein Entscheidungsbaum mit einer Struktur und einer Vielzahl von Schwellenwerten ausgeführt wird; wobei das Verfahren **dadurch gekennzeichnet ist, dass** es ferner Folgendes umfasst:
- Programmieren der Datenerzeugungsstufe (12, 40, 42, 44) durch die Mikrocontrollereinheit (20); und anschließend
- Erfassen eines Satzes von Datenvektoren (DV[k]) durch die Mikrocontrollereinheit (20), Bestimmen, für jede programmierbare Menge und auf der Grundlage des Satzes von Datenvektoren (DV[k]), eines entsprechenden Bereichs zulässiger Werte und anschließend Programmieren der Schwellenwerte als Funktion der Bereiche zulässiger Werte; und anschließend
- Klassifizieren der Datenvektoren (DV[k]) alternativ als normal oder abnormal durch die Entscheidungsstufe (12, 46), indem der Entscheidungsbaum auf der Grundlage der programmierten Schwellenwerte ausgeführt wird.

9. Verfahren nach Anspruch 8, wobei die Datenerzeugungsstufe (12, 40, 42, 44) eine Filterstufe (40) umfasst, die so konfiguriert ist, dass sie mindestens eine Abfolge von gefilterten Abtastwerten (X'[n]) erzeugt, indem ein digitaler Filter auf die Abtastwerte (X[n]) angewendet wird; und wobei die Datenerzeugungsstufe (12, 40, 42, 44) ferner derart konfiguriert ist, dass die Datenvektoren (DV[k]) eine Funktion der gefilterten Abtastwerte (X'[n]) sind; und wobei das Programmieren der Datenerzeugungsstufe (12, 40, 42, 44) das Programmieren des digitalen Filters umfasst.

10. Verfahren nach Anspruch 8 oder 9, wobei die Datenerzeugungsstufe (12, 40, 42, 44) ferner eine Merkmalsextraktionsstufe (42) umfasst, die so konfiguriert ist, dass sie eine Abfolge von Merkmalsvektoren (FV[k]) erzeugt, die von den Abtastwerten (X[n]) abhängen; und wobei die Datenerzeugungsstufe (12, 40, 42, 44) ferner derart konfiguriert ist, dass die Datenvektoren (DV[k]) eine Funktion der Merkmalsvektoren (FV[k]) sind; und wobei das Programmieren der Datenerzeugungsstufe (12, 40, 42, 44) das Programmieren der Merkmale umfasst.

11. Verfahren nach Anspruch 10, wenn es von Anspruch 9 abhängt, wobei die Merkmalsextraktionsstufe (42) so konfiguriert ist, dass sie den Wert jedes Merkmals der Merkmalsvektoren (FV[k]) auf der Grundlage eines entsprechenden Satzes von Abtastwerten (X[n]) oder eines entsprechenden Satzes von gefilterten Abtastwerten (X'[n]) berechnet; und wobei jeder Datenvektor (DV[k]) einen jeweiligen Merkmalsvektor (FV[k]) umfasst.

12. Verfahren nach einem der Ansprüche 8 bis 11, das ferner das Koppeln der Sensorvorrichtung (1) an einen externen Sensor (30) umfasst, der so konfiguriert ist, dass er eine Abfolge von externen Abtastwerten T[n] erzeugt, die eine entsprechende physikalische Größe anzeigen; und wobei die Datenerzeugungsstufe (12, 40, 42, 44) derart konfiguriert ist, dass die Datenvektoren (DV[k]) ebenfalls von den externen Abtastwerten T[n] abhängen.

13. Verfahren nach einem der Ansprüche 8 bis 12, das das Detektieren einer Anomalie der zu überwachenden Vorrichtung (19) durch die Mikrocontrollereinheit (20) umfasst, wenn ein Datenvektor (DV[k]) als abnormal klassifiziert wird.

## Revendications

1. Dispositif à capteur (1) comprenant une unité microcontrôleur (20) et un capteur (7) comprenant un transducteur (2 ; 60) apte à être couplé à un dispositif devant être surveillé (19) et configuré pour générer au moins un signal (sX(t)) indicatif d'une grandeur physique qui dépend du fonctionnement du dispositif devant être surveillé (19), le capteur (7) comprenant en outre un circuit de traitement (3) comprenant :
- un étage de conversion (16) configuré pour générer une succession d'échantillons (X[n]) de ladite grandeur physique en fonction du signal (sX(t)) ;
- un étage de génération de données (12, 40, 42, 44) configuré pour générer, d'une manière programmable par l'unité microcontrôleur (20), une succession de vecteurs de données (DV[k]) en fonction de la succession d'échantillons (X[n]), chaque vecteur de données (DV[k]) étant formé par un ensemble correspondant de valeurs d'un certain nombre de grandeurs programmables ; et
- un étage de décision (12, 46) ;
et dans lequel l'unité microcontrôleur (20) est configurée pour programmer l'étage de décision (12, 46) d'une manière telle que l'étage de décision (12, 46) soit configuré pour classer les vecteurs de données (DV[k]) par l'exécution d'un arbre de décision ayant une structure et une pluralité de seuils ; ledit dispositif à capteur (1) étant **caractérisé en ce qu'**il est en outre configuré pour fonctionner :
- dans un mode configuration, dans lequel l'unité microcontrôleur (20) programme l'étage de génération de données (12, 40, 42, 44) ; et par la suite
- dans un mode étalonnage, dans lequel l'unité microcontrôleur (20) acquiert un ensemble correspondant de vecteurs de données (DV[k]), détermine, pour chaque grandeur programmable et sur la base dudit ensemble correspondant de vecteurs de données (DV[k]), une plage correspondante de valeurs admissibles et programme par la suite les seuils en fonction des plages de valeurs admissibles ; et par la suite
- dans un mode détection, dans lequel l'étage de décision (12, 46) classe des vecteurs de données (DV[k]) correspondants soit comme normaux soit comme anormaux, par l'exécution de l'arbre de décision sur la base des seuils programmés.

2. Dispositif à capteur (1) selon la revendication 1, dans lequel l'étage de génération de données (12, 40, 42, 44) comprend un étage de filtrage (40) configuré pour générer au moins une succession d'échantillons filtrés (X'[n]) par l'application d'un filtre numérique aux échantillons (X[n]) ; et dans lequel l'étage de génération de données (12, 40, 42, 44) est en outre configuré d'une manière telle que les vecteurs de données (DV[k]) soient une fonction des échantillons filtrés (X'[n]) ; et dans lequel, lorsque le dispositif à capteur (1) fonctionne dans le mode configuration, l'unité microcontrôleur (20) programme le filtre numérique.

3. Dispositif à capteur (1) selon la revendication 1 ou 2, dans lequel l'étage de génération de données (12, 40, 42, 44) comprend en outre un étage d'extraction de caractéristiques (42) configuré pour générer une succession de vecteurs de caractéristiques (FV[k]) qui dépendent des échantillons (X[n]) ; et dans lequel l'étage de génération de données (12, 40, 42, 44) est en outre configuré d'une manière telle que les vecteurs de données (DV[k]) soient une fonction des vecteurs de caractéristiques (FV[k]) ; et dans lequel, lorsque le dispositif à capteur (1) fonctionne dans le mode configuration, l'unité microcontrôleur (20) programme les caractéristiques.

4. Dispositif à capteur (1) selon la revendication 3 lorsqu'elle est prise en dépendance de la revendication 2, dans lequel l'étage d'extraction de caractéristiques (42) est configuré pour calculer la valeur de chaque caractéristique des vecteurs de caractéristiques (FV[k]) sur la base d'un ensemble correspondant d'échantillons (X[n]) ou d'un ensemble correspondant d'échantillons filtrés (X'[n]) ; et dans lequel chaque vecteur de données (DV[k]) comprend un vecteur de caractéristique (FV[k]) respectif.

5. Dispositif à capteur (1) selon l'une quelconque des revendications précédentes, configuré pour se coupler à un capteur externe (30) configuré pour générer une succession d'échantillons externes T[n] indicatifs d'une grandeur physique correspondante ; et dans lequel l'étage de génération de données (12, 40, 42, 44) est configuré d'une manière telle que les vecteurs de données (DV[k]) dépendent également des échantillons externes T[n].

6. Dispositif à capteur (1) selon l'une quelconque des revendications précédentes, dans lequel le transducteur (2 ; 60) comprend un transducteur d'accélération (2) et/ou un transducteur de vitesse angulaire (60).

7. Dispositif à capteur (1) selon l'une quelconque des revendications précédentes, dans lequel l'unité microcontrôleur (20) est configurée pour détecter une anomalie du dispositif devant être surveillé (19) lorsqu'un vecteur de données (DV[k]) est classé comme anormal.

8. Procédé de commande d'un dispositif à capteur (1) comprenant une unité microcontrôleur (20) et un capteur (7) comprenant un transducteur (2 ; 60) apte à être couplé à un dispositif devant être surveillé (19) et configuré pour générer au moins un signal (sX(t)) indicatif d'une grandeur physique qui dépend du fonctionnement du dispositif devant être surveillé (19), le capteur (7) comprenant en outre un circuit de traitement (3) comprenant :
- un étage de conversion (16) configuré pour générer une succession d'échantillons (X[n]) de ladite grandeur physique en fonction du signal (sX(t)) ;
- un étage de génération de données (12, 40, 42, 44) configuré pour générer, d'une manière programmable par l'unité microcontrôleur (20), une succession de vecteurs de données (DV[k]) en fonction de la succession d'échantillons (X[n]), chaque vecteur de données (DV[k]) étant formé par un ensemble correspondant de valeurs d'un certain nombre de grandeurs programmables ; et
- un étage de décision (12, 46) programmable par l'unité microcontrôleur (20) ;
le procédé comprenant la programmation de l'étage de décision (12, 26), par le biais de l'unité microcontrôleur (20), d'une manière telle que l'étage de décision (12, 46) soit configuré pour classer les vecteurs de données (DV[k]) par l'exécution d'un arbre de décision ayant une structure et une pluralité de seuils ; le procédé étant **caractérisé en ce qu'**il comprend en outre :
- par le biais de l'unité microcontrôleur (20), la programmation de l'étage de génération de données (12, 40, 42, 44) ; et par la suite
- par l'unité microcontrôleur (20), l'acquisition d'un ensemble de vecteurs de données (DV[k]), la détermination, pour chaque grandeur programmable et sur la base dudit ensemble de vecteurs de données (DV[k]), d'une plage correspondante de valeurs admissibles et par la suite la programmation des seuils en fonction des plages de valeurs admissibles ; et par la suite
- par le biais de l'étage de décision (12, 46), le classement de vecteurs de données (DV[k]) soit comme normaux soit comme anormaux, par l'exécution de l'arbre de décision sur la base des seuils programmés.

9. Procédé selon la revendication 8, dans lequel l'étage de génération de données (12, 40, 42, 44) comprend un étage de filtrage (40) configuré pour générer au moins une succession d'échantillons filtrés (X'[n]) par l'application d'un filtre numérique aux échantillons (X[n]) ; et dans lequel l'étage de génération de données (12, 40, 42, 44) est en outre configuré d'une manière telle que les vecteurs de données (DV[k]) soient une fonction des échantillons filtrés (X'[n]) ; et dans lequel la programmation de l'étage de génération de données (12, 40, 42, 44) comprend la programmation du filtre numérique.

10. Procédé selon la revendication 8 ou 9, dans lequel l'étage de génération de données (12, 40, 42, 44) comprend en outre un étage d'extraction de caractéristiques (42) configuré pour générer une succession de vecteurs de caractéristiques (FV[k]) qui dépendent des échantillons (X[n]) ; et dans lequel l'étage de génération de données (12, 40, 42, 44) est en outre configuré d'une manière telle que les vecteurs de données (DV[k]) soient une fonction des vecteurs de caractéristiques (FV[k]) ; et dans lequel la programmation de l'étage de génération de données (12, 40, 42, 44) comprend la programmation des caractéristiques.

11. Procédé selon la revendication 10 lorsqu'elle est prise en dépendance de la revendication 9, dans lequel l'étage d'extraction de caractéristiques (42) est configuré pour calculer la valeur de chaque caractéristique des vecteurs de caractéristiques (FV[k]) sur la base d'un ensemble correspondant d'échantillons (X[n]) ou d'un ensemble correspondant d'échantillons filtrés (X'[n]) ; et dans lequel chaque vecteur de données (DV[k]) comprend un vecteur de caractéristique (FV[k]) respectif.

12. Procédé selon l'une quelconque des revendications 8 à 11, comprenant en outre le couplage du dispositif capteur (1) à un capteur externe (30) configuré pour générer une succession d'échantillons externes T[n] indicatifs d'une grandeur physique correspondante ; et dans lequel l'étage de génération de données (12, 40, 42, 44) est configuré d'une manière telle que les vecteurs de données (DV[k]) dépendent également des échantillons externes T[n].

13. Procédé selon l'une quelconque des revendications 8 à 12, comprenant la détection, par le biais de l'unité microcontrôleur (20), d'une anomalie du dispositif devant être surveillé (19), lorsqu'un vecteur de données (DV[k]) est classé comme anormal.
